# EUROPÄISCHE PATENTANMELDUNG

(11) **EP 0 849 068 A2**
(43) Veröffentlichungstag der Anmeldung: **24.06.1998**
(21) Anmeldenummer: 97121630.4
(22) Anmeldetag: 09.12.1997
(51) Int. Cl.: B29C 65/18

(54) **Schweissmaschine**

(30) Priorität: 20.12.1996 DE 19653245
(71) Anmelder: SMR Stiegler Maschinenfabrik GmbH, 73635 Rudersberg (DE)
(72) Erfinder: Gaffal, Peter, 73635 Rudersberg (DE); Schaal, Kurt, 73635 Rudersberg (DE)
(74) Vertreter: Dreiss, Fuhlendorf, Steimle & Becker, Patentanwälte

(57) **Zusammenfassung**

Die Erfindung betrifft eine Folienschweißmaschine mit wenigstens einer erhitzbaren Schweißleiste (4) und einem die Schweißleiste in ihrer Längsrichtung über Verbindungselemente (10) thermisch expandierbar haltenden Schweißleistenträger (2), der quer zur Längsrichtung der Schweißleiste (4) bewegbar ist, um die Schweißleiste auf die zu schweißende Folienbahn aufzusetzen bzw. von dieser abzuheben, die so verbessert werden soll, dass keine Justierarbeiten beim Betrieb durchgeführt werden müssen; die Folienschweißmaschine ist erfindungsgemäß gekennzeichnet durch ein Verbindungselement (10) in Form eines flächenhaft gegen einen im wesentlichen quer zur Hubrichtung des Trägers (2) verlaufenden Abschnitt des Trägers (2) anliegendes und die Schweißleiste (4) tragendes Gleitstück (12, 54, 70), welches in Längsrichtung der Schweißleiste (4) gegenüber dem Träger (2) geführt verschieblich ist.

## Beschreibung

Die Erfindung betrifft eine Folienschweißmaschine mit wenigstens einer erhitzbaren Schweißleiste und einem die Schweißleiste in ihrer Längsrichtung über Verbindungselemente thermisch expandierbar haltenden Schweißleistenträger, der quer zur Längsrichtung der Schweißleiste bewegbar ist, um die Schweißleiste auf die zu schweißende Folienbahn aufzusetzen bzw. von dieser abzuheben.

Bei Folienschweißmaschinen, bei denen die Schweißleiste im Wesentlichen starr mit dem Schweißleistenträger verbunden ist, erweist sich die unterschiedliche thermische Ausdehnung von Schweißleiste, Schweißleistenträger und Verbindungselementen als problematisch. Bei einer bekannten Folienschweißmaschine sind als Verbindungselemente bspw. nahezu starre Winkelbleche vorgesehen, die jedoch verstellbar sind, so dass der Abstand der Schweißleiste zum Schweißleistenträger an mehreren Stellen einstellbar ist. Auf diese Weise ist es möglich, die Maschine bei Raumtemperatur derart zu justieren, dass die Anlagefläche der Schweißleiste an die Folienbahn den Anforderungen an eine Trennnaht oder den höheren Anforderungen an eine Bodennaht entsprechend hinreichend gerade verläuft. Durch das Erhitzen der Schweißleiste auf ca. 550° Celsius dehnt sich diese in ihrer Längsrichtung am meisten aus; die starren Verbindungselemente verbiegen sich nur geringfügig, so dass eine Krümmung der Schweißleiste resultiert. Dies erfordert ein erneutes Justieren der Maschine, um die Schweißleiste wieder geradezurichten, was jedoch aufwendig und zeitraubend ist.

Bei einer Änderung der Schweißtemperatur, z.B. im Zuge eines Wechsels der Folienart, -dicke oder -lagenzahl, muss aufgrund der sich verändernden thermischen Ausdehnungsverhältnisse wiederum eine Korrektur durchgeführt werden.

Um die vorstehenden Nachteile zu beseitigen, ist nach Kenntnis der Anmelderin bereits der Versuch unternommen worden, die Schweißleiste in Längsrichtung verschieblich zu halten. Hierbei wurde ein U-förmiger Schweißleistenträger mit einer darin in Längsrichtung verschieblichen Schweißleiste vorgesehen, wobei zwischen Schweißleiste und Schweißleistenträger quer zur Längsrichtung wirkende Federmittel vorgesehen sind. Mit dieser quasi schwimmenden Anordnung der Schweißleiste kann eine genaue Einstellung nicht erreicht werden, es ist insbesondere nicht möglich, eine definierte Höheneinstellung der Schweißleiste durchzuführen, was für die meisten Anwendungen aber erforderlich ist.

Es wurde desweiteren nach Kenntnis der Anmelderin bereits der Versuch unternommen, an einem starren Schweißleistenträger federbelastete Zug- und Druckschrauben vorzusehen, wobei eine Druckschraube in ein Druckstück einschraubbar ist, welches unmittelbar gegen die Schweißleiste anliegt, so dass sich die Schweißleiste in Längsrichtung thermisch ausdehnen kann und dabei an dem Druckstück gleitet. Mit dem Druckstück kann jedoch nur eine Druckkraft zum Justieren der Schweißleiste übertragen werden, eine Haltekraft kann jedoch nicht ausgeübt werden.

Desweiteren ist nach Kenntnis der Anmelderin eine Folienschweißmaschine bekannt geworden, bei der die Schweißleiste etwa mittig über ein starres Verbindungselement gegenüber dem Schweißleistenträger zentriert ist. Der Schweißleistenträger ist mehrteilig ausgebildet und umfasst zwei parallele vertikal verlaufende Seitenwände. In den Seitenwänden sind einander gegenüberliegend langlochförmige Ausnehmungen vorgesehen, in welche vierkantförmige Vorsprünge eines zwischen den Seitenwänden vorgesehenen Klotzes kulissenartig eingreifen und zusammen mit dem Klotz in Längsrichtung des Trägers verschiebbar sind. Die in Längsrichtung verschieblichen Klötze sind über in vertikaler Richtung verstellbare Schrauben mit der Schweißleiste verbunden. Die Schweißleiste kann sich hier zwar bereits in Längsrichtung ausdehnen, ohne dass ein erneutes Justieren erforderlich wird. Die bei dieser Ausführungsform auftretenden Flächenpressungen sind jedoch sehr hoch, so dass insbesondere bei der Herstellung von Bodennähten, wenn also zwei Schweißleisten mit hoher Taktgeschwindigkeit und Kraft gegeneinanderstossen, die Gefahr besteht, dass die Schweißleistenaufhängung, im Bereich des Langlochs, bricht. Es besteht außerdem die Gefahr des Klemmens, was wiederum ein Verbiegen der Schweißleiste zur Folge hat. Es ist desweiteren erforderlich, einen gebauten, mehrteiligen Träger zu verwenden, um die Langlöcher vorsehen zu können und die Klötze zwischen den Trägerwänden anzuordnen, was aufwendig ist und die Summengenauigkeit der Fertigungstoleranzen weiter verschlechtert. Spielfreiheit lässt sich bei dieser Art der Schweißleistenaufhängung ebenfalls nicht erreichen.

Der vorliegenden Erfindung liegt daher die Aufgabe zugrunde, eine Folienschweißmaschine der eingangs beschriebenen Art dahingehend zu verbessern, dass ein Verbiegen der Schweißleiste im Zuge thermischer Ausdehnung sicher verhindert wird, so dass keine aufwendigen Justierarbeiten beim Betrieb der Maschine durchgeführt werden müssen. Die Maschine soll desweiteren auf einfache Weise herstellbar und störungsunanfällig sein und die Verwendung eines einteiligen Schweißleistenträgers ermöglichen.

Diese Aufgabe wird bei einer Folienschweißmaschine der genannten Art erfindungsgemäß gelöst durch ein Verbindungselement in Form eines flächenhaft gegen einen der Schweißleiste zugewandten Abschnitt des Trägers anliegenden und die Leiste tragenden Gleitstücks, welches in Längsrichtung der Schweißleiste gegenüber dem Träger geführt verschieblich ist.

Bei einer derartigen, vorzugsweise mehrere Gleitstücke aufweisenden Folienschweißmaschine besteht aufgrund der flächenhaften Anlage des Gleitstücks an dem wenigstens abschnittsweise ebenen Trägerabschnitt eine sehr geringe Flächenpressung. Es kann ein blockartiger einstückiger Schweißleistenträger verwendet werden, und es besteht nicht die Gefahr, dass die Schweißleistenaufhängung unter den im Betrieb der Maschine auftretenden hohen Kräften bricht, was bei bekannten Vorrichtungen immer wieder der Fall ist.

Der Trägerabschnitt, gegen den das Gleitstück flächenhaft anliegt, ist vorzugsweise von der Trägerunterseite gebildet, so dass er der Schweißleiste unmittelbar zugewandt ist. Es wäre aber auch denkbar, dass in dem Träger horizontale Ausnehmungen vorgesehen sind, um beispielsweise das Gewicht zu reduzieren; solchenfalls könnte der Trägerabschnitt auch die Innenseite der von der Schweißleiste abgewandten Trägerwand sein, welche die horizontale Ausnehmung begrenzt und ihrerseits der Schweißleiste zugewandt ist.

In bevorzugter Weise ist bei einer erfindungsgemäßen Folienschweißmaschine eine Andrückeinrichtung vorgesehen, mittels derer das Gleitstück gegen den Trägerabschnitt drückbar ist. Die Andrückeinrichtung ist vorzugsweise einstellbar, so dass die Kraft, mit der das Gleitstück flächenhaft gegen die ebene Trägerseite anliegt, eingestellt werden kann. Die Andrückeinrichtung umfasst in vorteilhafter Weise durch eine Trägerunterseite hindurchtretende Stellmittel, wie Schrauben.

Im Zuge der Fertigung der Folienschweißmaschine wird die Schweißleiste geradegerichtet, und die Kraft, mit der das Gleitstück gegen den ebenen Träger anliegt, wird eingestellt. Bei Erhitzen der Schweißleiste im Betrieb der Maschine kann sich die Schweißleiste in ihrer Längsrichtung thermisch ausdehnen; es treten keine Verspannungen oder Verbiegungen der Schweißleiste auf, da diese über die gegenüber dem Schweißleistenträger verschieblichen Gleitstücke unter Erhaltung ihrer geometrischen Ebenheit ausdehnbar ist, wobei die Gleitstücke gegen den Schweißleistenträger gleiten.

Zum Führen des Gleitstücks in exakter Längsrichtung der Schweißleiste kann eine in Längsrichtung der Schweißleiste verlaufende Nut in dem Träger vorgesehen sein, in welche das Gleitstück mit einem Führungsabschnitt eingreift. Es wäre jedoch auch denkbar, dass das Gleitstück den Träger U-förmig umfasst.

Als bevorzugtes Material für den Schweißleistenträger hat sich eine Aluminiumlegierung erwiesen, und das Gleitstück ist vorzugsweise von einer Messingplatte gebildet.

Nach einer besonders bevorzugten Ausführungsform der Erfindung ist ein ebener Träger von einer Trägerwand gebildet, die beispielsweise durch Ausfräsen des Trägers hergestellt wird, und auf der von dem Gleitstück abgewandten Seite der Trägerwand ist ein mit dem Gleitstück zusammenwirkendes und mit diesem in Längsrichtung verschiebliches Gegendruckstück vorgesehen.

Nach einem Erfindungsgedanken sind Gleitstück und Gegendruckstück unter Zwischenordnung der Trägerwand gegeneinander vorgespannt. Dies bringt den Vorteil mit sich, dass zumindest in vertikaler Richtung eine ideale Spielfreiheit zwischen Schweißleiste und Schweißleistenträger erreicht wird.

Gleitstück und Gegendruckstück sind in Weiterbildung dieses Erfindungsgedankens derart gegeneinander vorgespannt, dass sie Fertigungstoleranzen der Trägerwandflächen folgen und eine Keilform bildend gegeneinander verkippen können. Durch diese vorteilhafte Ausgestaltung wird stets eine flächenhafte Anlage des Gleitstücks am Schweißleistenträger erreicht, ohne dass die Gefahr besteht, dass die Bauteile gegeneinander klemmen. Um Gleitstück und Gegendruckstück von gegenüberliegenden Seiten gegen die Trägerwand zu drücken, kann im Prinzip eine Bügelfeder oder ein zwingenförmiges Spannelement verwandt werden. Es hat sich indessen als vorteilhaft erwiesen, dass das Gleitstück und das Gegendruckstück mittels wenigstens eines durch eine langlochförmige Öffnung in der Trägerwand hindurchtretenden, mit einem der Teile verbundenen und sich mittels einer Feder gegen das andere Teil abstützenden Stellmittels gegeneinander und somit gegen die Trägerwand vorgespannt sind. Das Stellmittel ist vorzugsweise eine Schraube, so dass durch Einschrauben oder Ausdrehen der Schraube die Spannkraft zwischen Gleitstück und Gegendruckstück eingestellt werden kann.

Nach einem weiteren Erfindungsgedanken, dem unabhängige und eigenständige Bedeutung zukommt, umfasst eine erfindungsgemäße Folienschweißmaschine ein leistenförmiges thermisches Isolierelement, welches an die der Schweißleiste zugewandte Seite des Trägers angefügt ist. Durch das Isolierelement, welches vorzugsweise auch das Gleitstück gegen die Schweißleiste abdeckt, wird erfindungsgemäß eine Erhitzung des Schweißleistenträgers im Betrieb der Maschine verhindert oder doch zumindest verringert. Auch die angrenzenden Seiten des Trägers könnten durch ein Isolierelement als Wärmeschild abgedeckt sein.

In Weiterbildung dieses Erfindungsgedankens hat es sich als ganz besonders vorteilhaft erwiesen, dass das Gleitstück selbst eine insbesondere plattenförmige Isolierschicht umfasst. Die meiste Wärme fließt nämlich über die Aufhängung der Schweißleiste auf den Schweißleistenträger ab, was zu einem schwankenden Temperaturprofil innerhalb der Schweißleiste entlang ihrer Längsrichtung führt und sich nachteilig auf die Qualität des Schweißprozesses auswirken kann.

Die Isolierschicht besteht vorzugsweise aus einem starren Material und ist vorzugsweise mittels lösbarer Befestigungsmittel, wie Schrauben, an eine Gleitschicht des Gleitstücks angefügt.

Die Isolierschicht kann aus mineralischen Materialien, wie Glimmer, oder aus keramischen, insbesondere faserverstärkten Materialien bestehen.

Im Hinblick auf eine optimale thermische Entkoppelung von Schweißleiste und Schweißleistenträger hat es sich als vorteilhaft erwiesen, die Schweißleiste derart an dem Gleitstück anzubringen, dass kein direkter thermisch gut leitender Pfad über aneinander anliegende metallische Teile gegeben ist.

Hierfür hat es sich als vorteilhaft erwiesen, dass die Schweißleiste an der insbesondere plattenförmigen Isolierschicht des Gleitstücks gehalten ist. Es können solchenfalls metallische Verbindungsmittel, wie Schrauben, verwendet werden, solange sie nicht in unmittelbarem Kontakt zu der insbesondere metallischen Gleitschicht des Gleitstücks stehen.

Um die Druckkräfte beim Betrieb der Folienschweißmaschine gleichmäßig flächenhaft übertragen zu können, hat es sich als vorteilhaft erwiesen, auf der von der Gleitschicht abgewandten Seite der Isolierschicht eine insbesondere metallische Druckplatte vorzusehen, gegen welche die Schweißleiste über Abstandshalter anliegt.

Bei einer erfindungsgemäß ausgebildeten Folienschweißmaschine, die ausschließlich zum Herstellen einer Trennnaht verwendet wird, wobei die Schweißleiste zum Herstellen der Trennnaht auf ein kompressibles Gegenlager trifft, ist es nicht notwendigerweise erforderlich, die Schweißleiste zusätzlich höhenverstellbar an dem Gleitstück zu halten. Die in der Praxis erforderliche Ebenheit der Schweißleiste beträgt größenordnungsmäßig 0,1 mm. Durch die erfindungsgemäße Ausbildung der Maschine kann diese Toleranz leicht eingehalten werden.

Wird eine Folienschweißmaschine auch zum Herstellen von Bodennähten benötigt, so dass zwei gegeneinander stoßende Schweißleisten vorgesehen sind, so müssen die Schweißleisten eine Ebenheit von weniger als 0,05 mm aufweisen, um den ordnungsgemäßen Betrieb der Maschine zu gewährleisten. Hierfür erweist es sich als vorteilhaft, wenn die Schweißleiste feinjustiert werden kann, um fertigungsbedingte Unebenheiten auszugleichen. Hierfür sind entlang der Schweißleiste vorzugsweise mehrere Einrichtungen zum Einstellen des Abstands der Schweißleiste von dem Gleitstück vorgesehen. In besonders einfacher und daher vorteilhafter Weise weist eine solche Einrichtung einen exzentrischen Stellmechanismus auf.

Bei einer ganz besonders bevorzugten Ausführungsform der erfindungsgemäßen Schweißmaschine weist die Andrückeinrichtung, mittels derer das Gleitstück gegen den der Schweißleiste zugewandten Abschnitt des Trägers angedrückt werden kann, ein durch den Träger hindurchtretendes Stellmittel auf, welches mit einer gesteuert betätigbaren Spannvorrichtung zusammenwirkt.

Diese Ausführungsform erweist sich insoweit als besonders vorteilhaft, als die Andrückkraft gesteuert und beispielsweise in Abhängigkeit von der Temperatur der Schweißleiste variiert werden kann. So erweist es sich als vorteilhaft, wenn während des Aufheizens die Spannvorrichtung eine geringere Andrückkraft auf das Gleitstück ausübt als während der Betriebsphase, um ein ungehindertes thermisches Expandieren der Schweißleiste zu ermöglichen. Ist die Schweißleiste einmal auf konstante Temperatur gebracht, so erweist es sich als vorteilhaft, wenn die Anpresskraft mittels der gesteuert betätigbaren Spannvorrichtung erhöht wird, um die Schweißleiste besser am Schweißleistenträger halten oder fixieren zu können. Beim Abschalten der Folienschweißmaschine oder wenn die Temperatur der Schweißleiste geändert werden soll, wird wiederum die Spannvorrichtung gelöst, die Temperaturänderung durchgeführt und anschließend die Andrückkraft wieder erhöht.

Die gesteuert betätigbare Spannvorrichtung kann in ansich beliebiger Weise verwirklicht werden. Nach einer bevorzugten Ausführungsform der Erfindung wirkt die Spannvorrichtung über einen Kniehebelmechanismus mit dem Stellmittel zusammen.

Wie vorstehend bereits erwähnt, ist die Spannvorrichtung vorzugsweise in Abhängigkeit von der Temperatur der Schweißleiste steuerbar bzw. betätigbar.

Nach einer weiteren konstruktiven Neuerung ist der Trägerabschnitt und das flächenhaft gegen den Trägerabschnitt anliegende Gleitstück quer zur Längsrichtung der Schweißleiste selbstzentrierend ausgebildet. Beim Anziehen bzw. Andrücken des Gleitstücks gegen den Trägerabschnitt wird das Gleitstück über Anlaufschrägen in seine korrekte Position gebracht.

Weitere Merkmale, Vorteile und Einzelheiten der Erfindung ergeben sich aus den beigefügten Ansprüchen und der zeichnerischen Darstellung und nachfolgenden Beschreibung dreier vorteilhafter Ausführungsformen der Erfindung. In der Zeichnung zeigt:
- Figur 1: eine Schnittansicht eines Schweißleistenträgers mit daran gehaltener Schweißleiste gemäß einer bevorzugten Ausführungsform der Erfindung;
- Figur 2: eine vergrößerte Schnittansicht eines Ausschnitts der Figur 1;
- Figur 3: eine Schnittansicht gesehen in Richtung der Pfeile III-III in Figur 2;
- Figur 4: eine Schnittansicht einer weiteren Ausführungsform, wobei eine Einrichtung zur Höhenverstellung der Schweißleiste vorgesehen ist;
- Figur 5: eine Ansicht in Richtung der Pfeile V-V in Figur 3;
- Figur 6: eine weitere Ausführungsform der Erfindung mit einem eine Isolierschicht aufweisenden Gleitstück;
- Figur 7: eine der Figur 2 entsprechende Schnittansicht einer weiteren Ausführungsform eines Schweißleistenträgers;
- Figur 8: eine Draufsicht auf den Träger nach Figur 7 und
- Figur 9: eine Schnittansicht entlang der Pfeile IX - IX in Figur 7

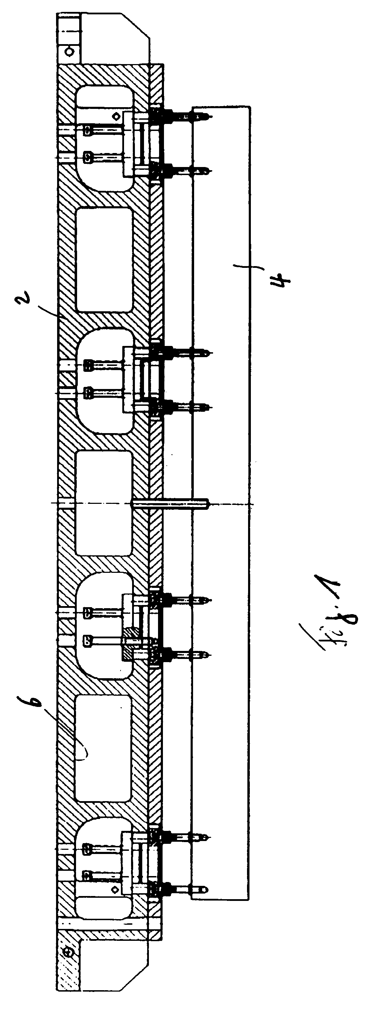

Figur 1 zeigt einen Schweißleistenträger 2 einer Folienschweißmaschine, der eine Schweißleiste 4 trägt. Der Schweißleistenträger 2 ist einstückig aus einem im Wesentlichen quaderförmigen Aluminiumkörper gefertigt und weist quer zur Längsrichtung der Schweißleiste 4 horizontale Ausfräsungen 6 auf, die das Gewicht des Schweißleistenträgers 2 erheblich reduzieren.

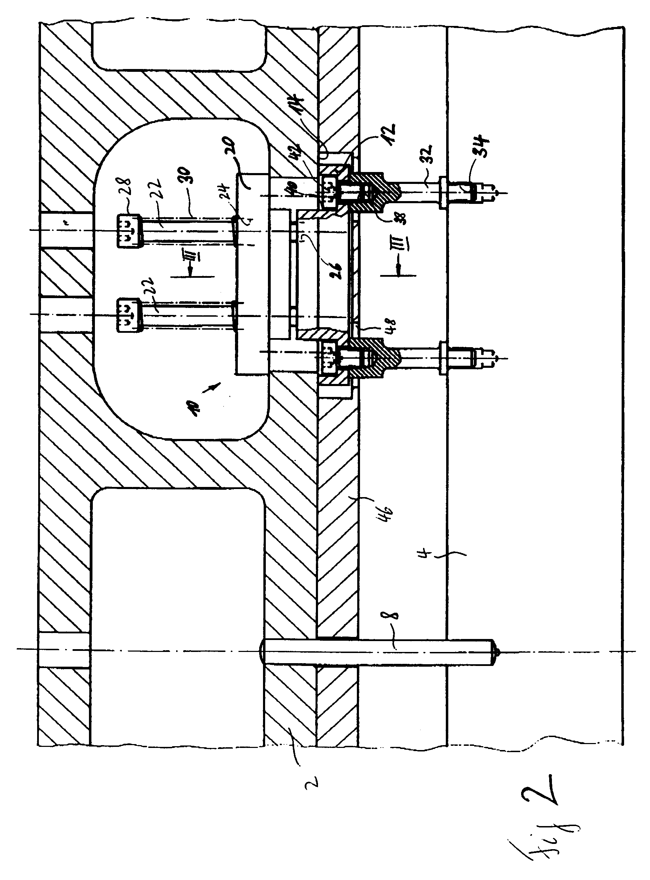

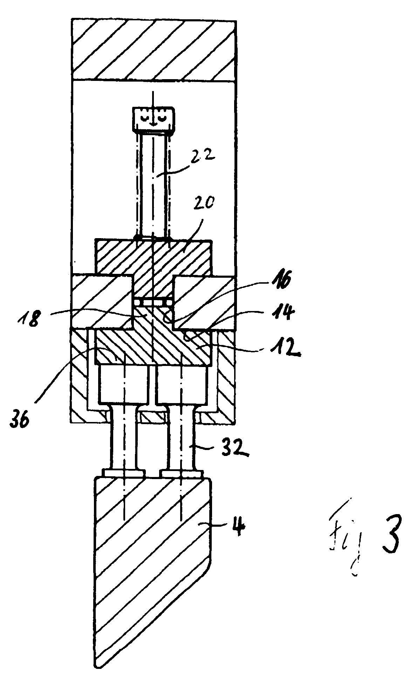

Einzelheiten der Aufhängung der Schweißleiste 4 an dem Schweißleistenträger 2 sind den Figuren 2 und 3 zu entnehmen. Die Schweißleiste 4 ist in ihrer Mitte über einen Bolzen 8 gegenüber dem Schweißleistenträger 2 zentriert. Sie ist an insgesamt 4 Stellen über je ein mit dem Bezugszeichen 10 bezeichnetes Verbindungselement an dem Schweißleistenträger 2 gehalten.

Jedes der Verbindungselemente 10 umfasst ein Gleitstück 12, welches flächenhaft gegen eine mit ihrer Ebene quer zur Hubrichtung erstreckte Unterseite 14 des Trägers 2 anliegt und gegenüber der Unterseite 14 verschieblich ist. In der Trägerunterseite 14 ist eine langlochförmige Öffnung 16 ausgebildet, in welche das Gleitstück 12 mit einem quaderförmigen Vorsprung 18 eingreift und in Längsrichtung verschieblich ist. Das Langloch 16 sowie der quaderförmige Vorsprung 18 bilden eine Längsführung für das Gleitstück 12.

Auf der von dem Gleitstuck 12 abgewandten Seite der Trägerunterseite 14 ist innerhalb einer Ausnehmung 6 ein mit dem Gleitstück 12 zusammenwirkendes Gegendruckstück 20 vorgesehen, welches ebenfalls flächenhaft gegen den Träger 2 anliegt und mit dem Gleitstück 12 in Längsrichtung verschieblich ist. Gegendruckstück 20 und Gleitstück 12 sind über Schraubbolzen 22 gegeneinander bzw. gegen den Träger 2 vorgespannt. Der Schraubbolzen 22 ist durch eine in der Figur 2 angedeutete Durchgangsöffnung 24 in dem Gegendruckstück 20 hindurchgeführt und in eine Gewindebohrung 26 in dem Gleitstück 12 eingeschraubt. Zwischen dem Schraubenkopf 28 der Schraubbolzen 22 und dem Gegendruckstück 20 ist eine Druckfeder 30 vorgesehen, welche eine Vorspannung von Gleitstück 12 und Gegendruckstück 20 bewirkt. Durch Einschrauben bzw. Ausdrehen der Schraubbolzen 22 lässt sich die Vorspannung bzw. die Kraft, mit der das Gleitstück und das Gegendruckstück 20 gegen die Trägerwand bzw. gegeneinander vorgespannt werden, einstellen.

Die Schweißleiste 4 ist über Abstandshalter 32 mit dem jeweiligen Gleitstück 12 verbunden. Die Abstandshalter 32 sind mit einem Gewindeabschnitt 34 in die Schweißleiste 4 eingeschraubt und weisen an ihrer freien Stirnseite eine Gewindebohrung 38 auf. In dem jeweiligen Gleitstück 12 sind abgesetzte Öffnungen 40 vorgesehen, in welche Befestigungsschrauben 42 eingesetzt und in die Gewindebohrungen 38 der Abstandshalter 32 eingeschraubt sind. Die Gleitstücke 12 sind daher starr mit der Schweißleiste 4 verbunden.

Desweiteren ist ein leistenförmiges thermisches Isolierelement 46 vorgesehen, welches die Unterseite 14 des Trägers 2 sowie das jeweilige Gleitstück 12 abdeckt. Es sind jedoch langlochförmige Öffnungen 48 vorgesehen, durch welche die Abstandshalter 32 hindurchgreifen.

Wenn die Schweißleiste 4 im Betrieb der Folienschweißmaschine erhitzt wird und sich in Längsrichtung ausdehnt, so verschiebt sich das jeweilige Gleitstück 12 mit dem zugehörigen Gegendruckstück 20 in der Figur 2 nach rechts. Hierbei wird durch die flächenhafte Anlage des Druckstücks 12 gegen die Trägerunterseite 14 eine spielfreie und dennoch mit verhältnismäßig geringer Flächenpressung einhergehende Verschiebbarkeit der Schweißleistenaufhängung gegenüber dem Träger 2 erreicht, so dass sich die Schweißleiste 2 ausdehnen und bei Erkalten wieder zusammenziehen kann, ohne dass die zuvor vorgenommene Ausrichtung der Schweißleiste verlorengeht oder eine Krümmung auftritt, die ein Nachjustieren der Schweißleiste erforderlich machen würde. Über die aus Gegendruckstück 20, Schraubbolzen 22 und Druckfeder 30 gebildete Andrückvorrichtung lässt sich die Kraft, mit der das jeweilige Gleitstück 12 gegen die Trägerunterseite 14 anliegt in geeigneter Weise einstellen.

Durch das leistenförmige thermische Isolierelement 46, das vorzugsweise aus Glimmer oder faserverstärkten insbesondere keramischen Werkstoffen bestehen kann, wird die Erwärmung des Schweißleistenträgers 2 erheblich verringert.

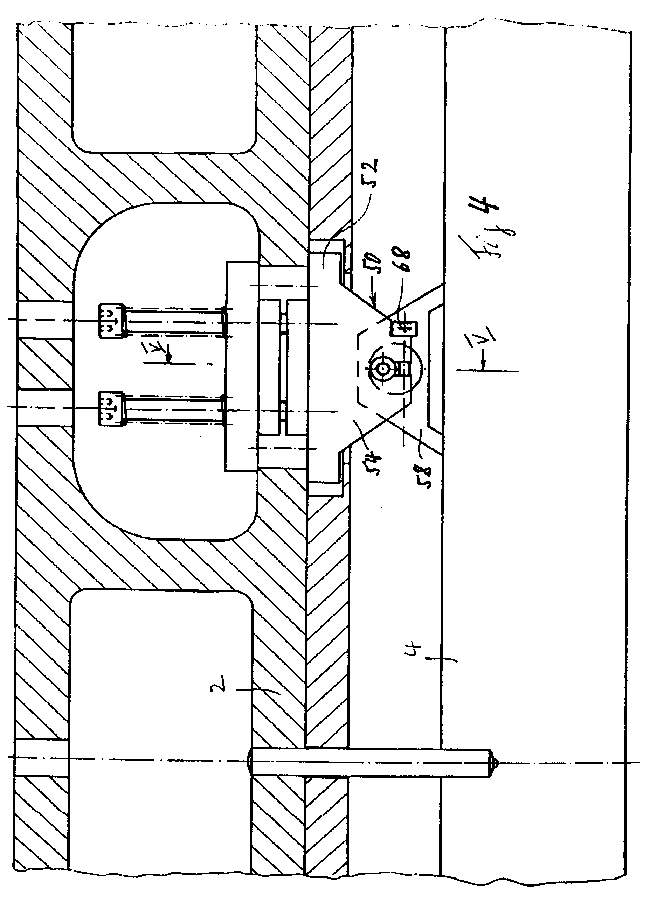

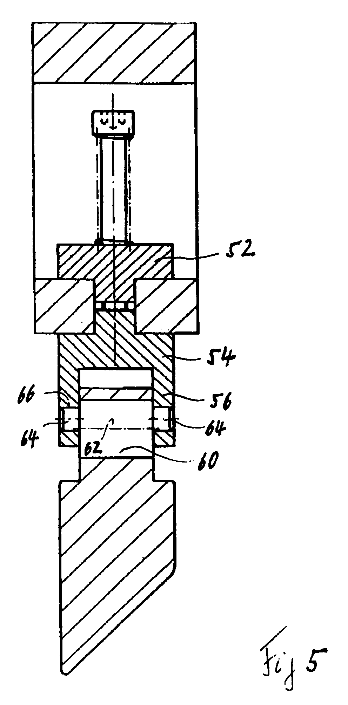

Aus den Figuren 4 und 5 ist eine weitere bevorzugte Ausführungsform einer Schweißleistenaufhängung dargestellt, die sich von der vorstehend beschriebenen Ausführungsform dadurch unterscheidet, dass eine Einrichtung 50 vorgesehen ist, mittels derer die Schweißleiste 4 gegenüber dem Träger 2 höhenverstellbar ist. Hierfür weist ein jeweiliges Gleitstück 52 einen trapezförmigen in Richtung auf die Schweißleiste 4 vorspringenden Halteabschnitt 54 auf, der in der Ansicht nach Figur 5 in gabelförmigen Laschen 56 ausläuft. An der Oberseite der Schweißleiste 4 ist ein Haltebügel 58 vorgesehen, der zwischen die gabelförmigen Laschen 56 eingreift und in diesem Bereich eine drehbare Kreisscheibe 60 mit in Richtung auf die Haltelaschen 56 vorstehenden und zur Kreisscheibenachse 62 exzentrischen Achszapfen 64 aufweist, die in entsprechende Ausnehmungen 66 in den Haltelaschen 56 eingreifen. Durch Verstellen des auf diese Weise gebildeten Stellexzenters kann der Abstand der Schweißleiste 4 vom Träger 2 eingestellt werden. Über eine in der Figur 4 angedeutete Klemmschraube 68 kann die Exzentereinstellung fixiert werden.

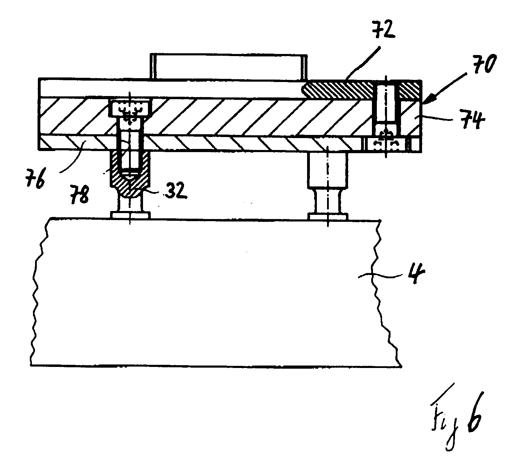

Figur 6 zeigt eine weitere bevorzugte Ausführungsform einer Schweißleistenaufhängung, bei der ein Gleitstück 70 eine metallische Gleitschicht 72, welche flächenhaft gegen einen Schweißleistenträger anlegbar und wie in der vorstehend beschriebenen Weise gegenüber diesem verschieblich ist, sowie eine plattenförmige Isolierschicht 74 umfasst. Gleitschicht 72 und Isolierschicht 74 sind an mehreren Stellen miteinander verschraubt. Auf der der Schweißleiste 4 zugewandten Seite der Isolierschicht 74 ist eine Druckplatte 76 vorgesehen, gegen welche Abstandshalter 32 der vorausgehend beschriebenen Art abgestützt sind. Die Druckplatte 76 weist Schraubendurchgangsöffnung 78 auf, damit die Isolierschicht 74 unter Zwischenordnung der Druckplatte 76 mit den Abstandshaltern 32 verschraubbar ist. Durch die plattenförmige Isolierschicht 74 wird erreicht, dass zwischen der Schweißleiste 4 und dem Schweißleistenträger 2 kein direkter thermisch gut leitender Pfad über aneinander angrenzende metallische Bauteile gegeben ist. Auf diese Weise wird die über die Schweißleistenaufhängung zum Schweißleistenträger abfließende Wärme wesentlich reduziert, was zu einer Glättung der Temperaturverteilung über die Länge der Schweißleiste 4 führt.

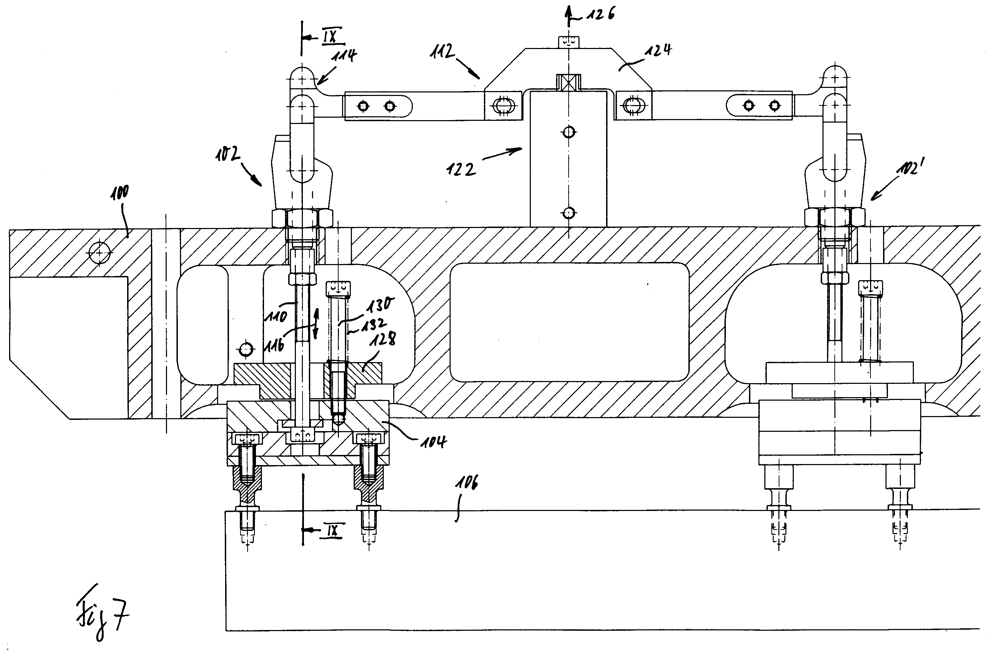

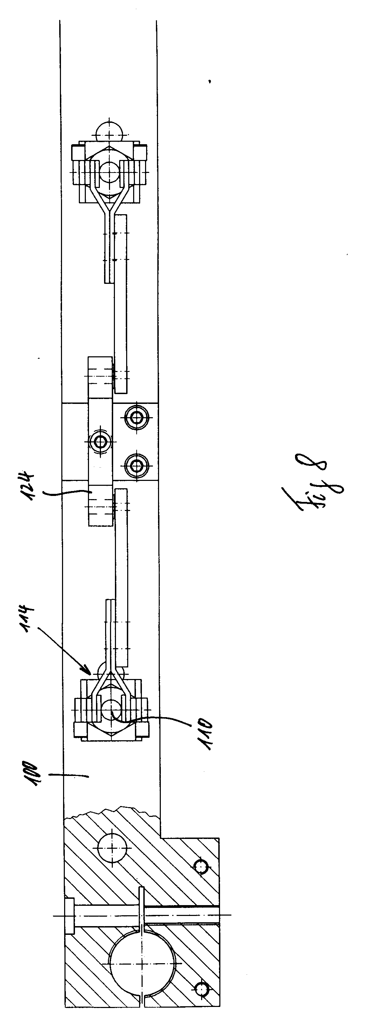

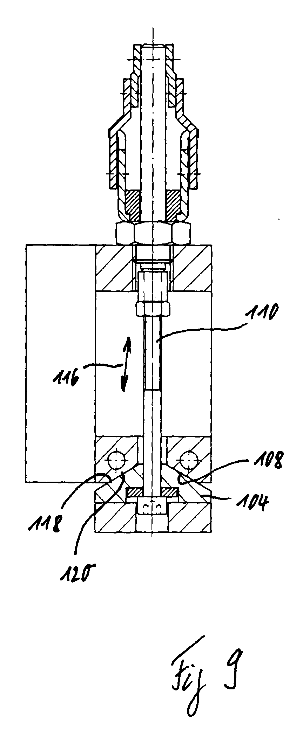

Die Figuren 7 bis 9 zeigen eine weitere Ausführungsform eines Schweißleistenträgers 100 mit einer insgesamt mit dem Bezugszeichen 102 bezeichneten Andrückeinrichtung zum Anlegen oder Anziehen des Gleitstücks 104 gegen einen der Schweißleiste 106 zugewandten Abschnitt 108 des Schweißleistenträgers 100. Die Andrückeinrichtung 102 umfasst ein durch den Schweißleistenträger 100 hindurchtretendes Stellmittel 110, welches mit einer gesteuert betätigbaren Spannvorrichtung 112 über einen Kniehebelmechanismus 114 derart zusammenwirkt, dass es in Stellrichtung 116 bewegbar ist, wodurch die Andrückkraft zwischen selbstzentrierenden Anlaufschrägen 118, 120 am Gleitstück 104 bzw. am Schweißleistenträger 100 gesteuert werden kann. Die Spannvorrichtung 112 umfasst einen pneumatisch, hydraulisch oder in sonstiger Weise gesteuerten Stellmechanismus 122.

Wenn die Andrückeinrichtung 102 gelöst werden soll, das stangenförmige Stellmittel 110 also in Richtung zur Schweißleiste 106 geringfügig verstellt werden soll, so wird über den Stellmechanismus 122 ein jochförmiges Bauteil 124 in Richtung des Pfeils 126 angehoben, so dass über den Kniehebelmechanismus 114 das stangenförmige Stellmittel 116 geringfügigst nach unten verschoben wird. Über das jochförmige Bauteil 124 wird gleichzeitig eine zweite Andrückeinrichtung 102', die spiegelbildlich ausgebildet ist, betätigt.

Ein dem Gleitstück 104 zugeordnetes Gegendruckstück 128 ist über einen durch das Gegendruckstück 128 hindurchtretenden und in das Gleitstück 104 eingeschraubten Schraubbolzen 130 und eine den Schraubbolzen 130 umgebende gegen das Gegendruckstück 128 abgestützte Feder 132 gegeneinander vorgespannt. Hierdurch wird das Gleitstück auch dann am Schweißleistenträger 100 unter einer gewissen Vorspannung gehalten, wenn die Andrückeinrichtung 102 gelöst ist.

## Patentansprüche

1. Folienschweißmaschine mit wenigstens einer erhitzbaren Schweißleiste (4) und einem die Schweißleiste in ihrer Längsrichtung über Verbindungselemente (10) thermisch expandierbar haltenden Schweißleistenträger (2), der quer zur Längsrichtung der Schweißleiste (4) bewegbar ist, um die Schweißleiste auf die zu schweißende Folienbahn aufzusetzen bzw. von dieser abzuheben, **gekennzeichnet durch** ein Verbindungselement (10) in Form eines flächenhaft gegen einen der Schweißleiste (4) zugewandten Abschnitt (14) des Trägers (2) anliegenden und die Schweißleiste (4) tragenden Gleitstücks (12, 54, 70), welches in Längsrichtung der Schweißleiste (4) gegenüber dem Träger (2) geführt verschieblich ist.

2. Folienschweißmaschine nach Anspruch 1, dadurch gekennzeichnet, daß in dem Trägerabschnitt (14) eine in Längsrichtung der Schweißleiste (4) verlaufende Nut oder Öffnung (16) vorgesehen ist, in welche das Gleitstück (12, 54, 70) mit einem Führungsabschnitt (18) eingreift.

3. Folienschweißmaschine nach Anspruch 1, dadurch gekennzeichnet, daß das Gleitstück den Träger U-förmig umfaßt.

4. Folienschweißmaschine nach Anspruch 1, 2 oder 3, gekennzeichnet durch eine Andrückeinrichtung, mittels derer das Gleitstück (12, 54, 70) gegen den Trägerabschnitt (14) drückbar ist.

5. Folienschweißmaschine nach Anspruch 4, dadurch gekennzeichnet, daß die Andrückkraft der Andrückeinrichtung einstellbar ist.

6. Folienschweißmaschine nach Anspruch 5, dadurch gekennzeichnet, daß die Andrückeinrichtung durch den Trägerabschnitt (14) hindurchtretende Stellmittel (22) umfaßt.

7. Folienschweißmaschine nach Anspruch 6, dadurch gekennzeichnet, dass der Trägerabschnitt (14) von einer Trägerwand gebildet ist und auf der von dem Gleitstück (12, 54, 70) abgewandten Seite der Trägerwand ein mit dem Gleitstück (12) zusammenwirkendes und mit diesem in Längsrichtung verschiebliches Gegendruckstück (20) vorgesehen ist.

8. Folienschweißmaschine nach Anspruch 7, dadurch gekennzeichnet, daß das Gleitstück (12, 54, 70) und das Gegendruckstück (20) unter Zwischenordnung der Trägerwand gegeneinander vorgespannt sind.

9. Folienschweißmaschine nach Anspruch 8, dadurch gekennzeichnet, daß das Gleitstück (12, 54, 70) und das Gegendruckstück (20) derart gegeneinander vorgespannt sind, daß sie Fertigungstoleranzen der Trägerwandflächen folgend eine Keilform bildend gegeneinander kippbar sind.

10. Folienschweißmaschine nach Anspruch 8 oder 9, dadurch gekennzeichnet, daß das Gleitstück (12, 54, 70) und das Gegendruckstück (20) mittels wenigstens eines durch eine langlochförmige Öffnung (16) in der Trägerwand hindurchtretenden, mit einem der Teile verbundenen und sich mittels einer Feder (30) gegen das andere Teil abstützenden Stellmittels gegeneinander und somit gegen die Trägerwand vorgespannt sind.

11. Folienschweißmaschine nach Anspruch 10, dadurch gekennzeichnet, daß das Stellmittel eine durch eines der Teile sowie durch die Trägerwand hindurchtretende und in das andere eingeschraubte Schraube (22) ist und die Feder (30) einenends gegen das erste Teil und anderenends gegen den Schraubenkopf (28) abgestützt ist.

12. Folienschweißmaschine nach wenigstens einem der vorstehenden Ansprüche, gekennzeichnet durch ein leistenförmiges thermisches Isolierelement (46), welches an die der Schweißleiste (4) zugewandte Seite des Trägers (2) angefügt ist.

13. Folienschweißmaschine nach Anspruch 12, dadurch gekennzeichnet, daß das Isolierelement (46) auch das Gleitstück (12) gegen die Schweißleiste (4) abdeckt.

14. Folienschweißmaschine nach einem der vorstehenden Ansprüche, dadurch gekennzeichnet, daß das Gleitstück (70) eine insbesondere plattenförmige Isolierschicht (74) umfaßt.

15. Folienschweißmaschine nach Anspruch 14, dadurch gekennzeichnet, daß die Isolierschicht (74) aus einem starren Material besteht und mittels Befestigungsmitteln an eine Gleitschicht (72) des Gleitstücks (70) angefügt ist.

16. Folienschweißmaschine nach einem der Ansprüche 12-15, dadurch gekennzeichnet, daß das Isolierelement (46) oder die Isolierschicht (74) des Gleitstücks (70) aus mineralischen Materialien, insbesondere Glimmer, besteht.

17. Folienschweißmaschine nach einem der Ansprüche 12-15, dadurch gekennzeichnet, daß das Isolierelement (46) oder die Isolierschicht (74) des Gleitstücks (70) aus keramischem Material besteht.

18. Folienschweißmaschine nach einem der Ansprüche 12-15, dadurch gekennzeichnet, daß das Isolierelement oder die Isolierschicht des Gleitstücks aus faserverstärktem Material besteht.

19. Folienschweißmaschine nach einem der vorstehenden Ansprüche, dadurch gekennzeichnet, daß die Schweißleiste (4) derart an dem Gleitstück (70) gehalten ist, daß kein direkter thermisch gut leitender Pfad über aneinander anliegende metallische Materialien gegeben ist.

20. Folienschweißmaschine nach einem der Ansprüche 14-19, dadurch gekennzeichnet, daß die Schweißleiste (4) an der Isolierschicht (74) des Gleitstücks (70) gehalten ist.

21. Folienschweißmaschine nach Anspruch 20, dadurch gekennzeichnet, daß die Schweißleiste (4) mittels mit ihren Köpfen an der Isolierschicht (74) abgestützten Schrauben mit der Isolierschicht (74) verschraubt ist.

22. Folienschweißmaschine nach einem der Ansprüche 14-21, dadurch gekennzeichnet, daß auf der von der Gleitschicht (72) abgewandten Seite der Isolierschicht (74) eine Druckplatte (76) vorgesehen ist, gegen welche die Schweißleiste (4) über Abstandshalter (32) anliegt.

23. Folienschweißmaschine nach Anspruch 22, dadurch gekennzeichnet, daß die Abstandshalter (32) Distanzbolzen sind, in deren Stirnseiten Gewindeöffnungen zum Verschrauben mit dem Gleitstück (12, 54, 70) vorgesehen sind.

24. Folienschweißmaschine nach wenigstens einem der vorstehenden Ansprüche, gekennzeichnet durch Abstandshalter (32) aus einem nicht versprödenden Material, wie warmfester oder hochwarmfester Stahl.

25. Folienschweißmaschine, nach weingstens einem der vorstehenden Ansprüche, gekennzeichnet durch eine Einrichtung (50) zum Einstellen des Abstands der Schweißleiste (4) von dem Gleitstück (54).

26. Folienschweißmaschine nach Anspruch 25, dadurch gekennzeichnet, daß die Einrichtung (50) ein exzentrisches Stellmittel (60, 64) aufweist.

27. Folienschweißmaschine nach einem oder mehreren der Ansprüche 4 bis 26, dadurch gekennzeichnet, dass die Andrückeinrichtung (102) ein durch den Schweißleistenträger (100) hindurchtretendes Stellmittel (110) aufweist, welches mit einer gesteuert betätigbaren Spannvorrichtung (112) zusammenwirkt.

28. Folienschweißmaschine nach Anspruch 27, dadurch gekennzeichnet, dass die Spannvorrichtung 112 über einen Kniehebelmechanismus 114 mit dem Stellmittel 110 zusammenwirkt.

29. Folienschweißmaschine nach Anspruch 27 oder 28, dadurch gekennzeichnet, dass die Spannvorrichtung in Abhängigkeit von der Temperatur der Schweißleiste 106 steuerbar oder betätigbar ist.

30. Folienschweißmaschine nach einem oder mehreren der vorhstehend genannten Ansprüche, dadurch gekennzeichnet, dass der Trägerabschnitt (14, 108) und das flächenhaft dagegen anliegende Gleitstück (12,54, 70,104) quer zur Längsrichtung selbstzentrierend ausgebildet sind.
